# EUROPÄISCHE PATENTSCHRIFT

(11) **EP 3 983 944 B1**
(45) Veröffentlichungstag und Bekanntmachung des Hinweises auf die Patenterteilung: **11.10.2023**
(21) Anmeldenummer: 19733417.0
(22) Anmeldetag: 14.06.2019
(51) Int. Cl.: G06K 17/00, G09F 3/20

(54) **ELEKTRONISCHES REGALETIKETTEN-SYSTEM MIT ENERGIEVERSORGUNG**
ELECTRONIC SHELF LABELLING SYSTEM WITH A POWER SUPPLY
SYSTÈME ÉLECTRONIQUE D'ÉTIQUETTES DE RAYONS À ALIMENTATION EN ÉNERGIE

(43) Veröffentlichungstag der Anmeldung: 20.04.2022
(73) Patentinhaber: SES-Imagotag GmbH, 8072 Fernitz-Mellach (AT)
(72) Erfinder: RÖSSL, Andreas, 8072 Fernitz-Mellach (AT)
(74) Vertreter: Schneider, Michael
(86) Internationale Anmeldenummer: PCT/EP2019/065715
(87) Internationale Veröffentlichungsnummer: WO 2020/249231

(56) Entgegenhaltungen:
- EP-A1- 0 623 873
- WO-A1-2017/097736
- US-A1- 2015 310 775

## Beschreibung

### Technisches Feld

Die Erfindung betrifft ein elektronisches Regaletiketten-System mit Energieversorgung über eine Regalschiene.

### Hintergrund.

Ein elektronisches Regaletiketten-System zur Anzeige von Information mit Hilfe von elektronischen Regaletikettenanzeigen, nachfolgend kurz ESL-System genannt, wobei ESL für "Electronic Shelf Label" steht, mit Energieversorgung über eine Regalschiene ist beispielsweise aus der internationalen Patentanmeldung WO 2017/153481 A1 bekannt. Bei diesem bekannten ESL-System ist eine Regalschiene, an der die ESLs angebracht werden, mit elektrischen Leiterbahnen ausgerüstet, die an ein Netzgerät zur elektrischen Versorgung der ESLs angeschlossen sind. Die ESLs weisen an ihrer Rückseite gefederte Kontakte auf, mit denen die Leiterbahnen kontaktiert werden, um die ESLs elektrisch mit dem Netzgerät zu verbinden.

Die bekannte Energieversorgung ist jedoch relativ teuer, weil eine Vielzahl, insbesondere vereinzelter, mechanischer Komponenten in jedem ESL und in jeder Regalschiene vorzusehen ist. Diese mechanischen Komponenten unterliegen einer natürlichen Abnutzung. Zudem können die mechanischen Komponenten bei unsachgemäßer Handhabung verunreinigt oder sogar beschädigt werden. Dies kann im Betrieb zu Störungen führen. Auch geht mit den mechanischen Komponenten ein erheblicher Mehraufwand in der Herstellung wie auch in der Wartung, die zur Vermeidung der genannten Probleme im Betrieb nötig ist, einher. Bei dem bekannten System existiert zudem die Einschränkung, dass die ESLs nicht wahlfrei entlang der Regalschiene positioniert oder verschoben werden können.

EP 0 623 873 A1 offenbart ein Regaletiketten-System und bildet die Basis für den Oberbegriff des Anspruchs 1.

Die Erfindung hat sich die Aufgabe gestellt, ein verbessertes ESL-System bereitzustellen, bei dem die vorstehend genannten Probleme überwunden sind.

### Zusammenfassung der Erfindung

Diese Aufgabe wird durch ein elektronisches Regaletiketten-System gemäß Anspruch 1 gelöst.

Die Aufgabe wird weiterhin gelöst durch eine Verwendung einer elektronischen Versorgung-Einrichtung zur kontaktlosen Energieversorgung und zur kontaktlosen Kommunikationsversorgung gemäß Anspruch 13.

Mit den erfindungsgemäßen Maßnahmen geht der Vorteil einher, dass die Energieversorgung des Regaletiketts völlig frei von mechanischen Kontakten und den damit einhergehenden Problemen erfolgt. Somit lässt sich das System kostengünstiger herstellen und wegen der vermiedenen, insbesondere wartungsanfälligen, mechanischen Komponenten de facto wartungsfrei betreiben.

Weitere, besonders vorteilhafte Ausgestaltungen und Weiterbildungen der Erfindung ergeben sich aus den abhängigen Ansprüchen sowie der nachfolgenden Beschreibung. Dabei können Merkmale der einen Anspruchs-Kategorie entsprechend den Merkmalen der anderen Anspruchs-Kategorie weiterentwickelt werden, sodass die im Zusammenhang mit der einen Anspruchs-Kategorie angeführten Wirkungen und Vorteile auch für die andere Anspruchs-Kategorien vorliegen.

Ein solches elektronisches Regaletikett kann unterschiedlichste Funktionalitäten bereitstellen bzw. Funktionen erfüllen. Das Regaletikett kann z.B. zum Erfassen von Umgebungsparametern, wie z.B. zur Temperatur- oder auch Feuchtigkeitserfassung, oder als Eingabeelement zum Empfang einer Eingabeinteraktion eines Benutzers (z.B. Erfassen eines Fingerabdrucks oder einer Tastenbetätigung) oder auch als Anzeigemedium zur Präsentation einer Information für den Benutzer, nämlich als Regaletikettenanzeige, konfiguriert bzw. dementsprechend ausgebildet sein. In jedem Fall ist das Regaletikett derart ausgebildet, dass es an der gegenständlichen Regalschiene anbringbar ist und dort mit Energie in der nachfolgend im Detail beschriebenen Art und Weise versorgt wird.

Das Regaletikett kann eine proprietäre Schnittstelle zur Energieübertragung aufweise, die nur für diesen Zweck einsetzbar ist. Bevorzugt weist das Regaletikett jedoch eine standardisierte Energieübertragung-Schnittstelle auf, die beispielsweise gemäß dem RFID-Standard (RFID steht für Radio Frequency Identification und ein zutreffender Standard ist z.B. ISO/IEC 18000 usw.) ausgebildet sein kann. Besonders bevorzugt weist das Regaletikett jedoch eine erste NFC-Schnittstelle für seine kontaktlose Energieversorgung auf. Damit geht der Vorteil einher, dass diese NFC-Schnittstelle nicht nur zur lokalen Energieübertragung am Regal bzw. an der Regalschiene, sondern auch direkt dort zur bidirektionalen kontaktlosen Kommunikation einsetzbar ist. Damit werden insbesondere Probleme im Funkverkehr verursacht durch andere Funksysteme in einem Geschäft vermieden, weil diese üblicherweise weit entfernt von den Regalen, wo das Regaletikett installiert ist, lokalisiert sind und daher kaum bis garkeinen Einfluss auf die lokale Energieübertragung wie auch Kommunikation zwischen den eng aneinander positionierten Kommunikationspartnern direkt an der Regalschiene haben. NFC steht hier für Near Field Communication und die zutreffenden Standards sind z.B. ISO/IEC 13157, -16353, -22536, -28361 usw.

Das Regaletikett, wenn konfiguriert als Regaletikettenanzeige, kann_ eine energiesparende Anzeigeeinheit, wie z.B. eine LCD Anzeige aufweisen. Insbesondere basiert die zur Anwendung kommende Technologie jedoch auf Electronic-Ink- bzw. Electronic-Paper-Technologie. Ein solche Anzeigeeinheit weist also einen reflektiven Bildschirm im Fachjargon auch Electronic-Paper-Display, abgekürzt EPD, genannt und ist mit Hilfe von "elektronischem Papier", kurz "E-Papier" auch englisch "e-paper" oder "e-ink" genannt, realisiert. Diese Begriffe stehen im Wesentlichen für das Prinzip einer elektrophoretischen Anzeige, bei der z.B. positiv geladene, weiße Partikel und negativ geladene, schwarze Partikel in einem transparenten zähflüssigen Polymer enthalten sind. Durch kurzzeitiges Anlegen einer Spannung an Elektroden, zwischen denen das Medium aus Partikeln und Polymer angeordnet ist, werden in Betrachtungsrichtung entweder die schwarzen vor den weißen Partikeln platziert oder umgekehrt. Diese Anordnung bleibt dann ohne weitere Energiezufuhr für relativ lange Zeit (z.B. einige Wochen) aufrecht. Segmentiert man die Anzeige entsprechend, so lassen sich z.B. Buchstaben, Zahlen oder Bilder mit relativ hoher Auflösung realisieren, um besagte Informationen anzuzeigen. Ein solcher reflektiver Bildschirm kann jedoch auch mit Hilfe anderer Technologien, die z.B. unter dem Begriff "electrowetting" oder "MEMS" bekannt sind, realisiert sein. Der Bildschirm kann z.B. wie erwähnt zur Schwarz-Weiß-Wiedergabe, zur Graustufen-Wiedergabe, zur Schwarz-Weiß-Rot- oder auch Schwarz-Weiß-Gelb-Wiedergabe ausgebildet sein. Auch sollen zukünftige Entwicklungen mitumfasst sein, die eine Voll-Farb- oder auch Multi-Color-Wiedergabe ermöglichen. Bei einem solchen Bildschirm handelt es sich ganz allgemein um einen reflektiven, also passiven, nicht selbst leuchtenden Bildschirm bei dem die - relativ statische - Informationswiedergabe darauf basiert, dass von einer externen (künstlichen oder natürlichen) Lichtquelle erzeugtes Licht auf den Bildschirm einstrahlt und von dort zum Betrachter reflektiert wird.

Die Anzeigeneinheit wird mit Hilfe der ersten NFC-Schnittstelle einerseits mit Energie und andererseits mit Daten, die Befehle zur Steuerung der Anzeigeeinheit oder auch Bildinhalte repräsentieren können, versorgt. Es lassen sich während der Energieversorgung über die NFC-Schnittstelle auch besagte Daten über diese NFC-Schnittstelle übermitteln, die von der Anzeigeeinheit dahingehend verarbeitet werden, dass sich der Bildinhalt ihres Bildschirms verändert. Nach abgeschlossener Veränderung des Bildinhalts kann von der Anzeigeeinheit über die NFC-Schnittstelle auch eine entsprechende Status-Information abgegeben werden, welche die erfolgreiche Veränderung des Bildinhalts repräsentiert. Nach abgeschlossener Veränderung des Bildinhalts, gegebenenfalls auch nach Abgabe der Status-Information, kann die Energieversorgung über die NFC-Schnittstelle beendet werden, wonach der Bildinhalt des Bildschirms bis zur nächsten gewollten Veränderung unverändert bleibt.

Der Einsatz der genannten Technologien erlaubt vor allem die Realisierung des Regaletiketts, insbesondere als Regaletikettenanzeige ausgebildet, ohne eine eigene Energieversorgung wie beispielsweise eine Batterie oder einen Akkumulator, die beide relativ teuer sind. Auch muss ein konventionelles Regaletikett zwecks Wartung oder Erneuerung der Batterie oder des Akkumulators derart ausgebildet sein, dass diese Energiespeicher austauschbar sind. Gegebenenfalls kommt in dem Regaletikett nur mehr ein Kondensator zur kurzfristigen, temporären Glättung bzw. Stabilisierung der internen Versorgungsspannung zur Anwendung. Das Regaletikett ist also derart ausgebildet, dass seine Elektronik zur Kommunikation oder zum Update des Bildschirminhalts oder zum Empfangen von Benutzerinteraktion oder zum Erfassen von Umgebungsparametern, insbesondere seine elektronische Steuerung, immer nur dann aktiv ist, wenn es mit Hilfe der externen elektronischen Versorgung-Einrichtung versorgt wird. Das Gehäuse kann vollständig und dauerhaft gekapselt sein, weil kein Austausch des Energiespeichers mehr nötig ist, so dass es sich nur mehr für Recyclingzwecke (z.B. mit Spezialwerkzeug) öffnen lässt.

Es lässt sich somit ein auf wenige, absolut benötigte elektronische Komponenten reduziertes und daher auch extrem günstiges Regaletikett realisieren. Dieses extrem reduzierte Regaletikett braucht nur mehr über eine Basisfunktionalität zu verfügen, wie z.B. standardisierte NFC-Kommunikation mit standardisierter Energieversorgung während der NFC-Kommunikation, was mit Hilfe eines kommerziell erhältlichen NFC-Moduls realisiert ist. Updates des Bildschirms der energiesparenden Anzeigeeinheit und Statusbericht dazu, werden nicht direkt von der Regaletikettenanzeige in einer Kommunikation mit einem Access-Point erledigt, so wie dies bei bekannten Systemen der Fall ist, sondern von der zwischengeschalteten Versorgung-Einrichtung abgewickelt, die ihrerseits über eine geeignete (und im Wesentlichen frei wählbare) Kommunikationsmethode mit dem Access-Point in Kontakt steht, worauf nachfolgend noch im Detail eingegangen ist. Gleiches gilt auf analoge Weise für die anderen erwähnten möglichen Funktionalitäten des Regaletiketts.

Gemäß einem Aspekt weist die Versorgung-Einrichtung zumindest eine an der Regalschiene ausgebildete Leiterschleife, und eine mit der zumindest einen Leiterschleife gekoppelte, insbesondere mit deren beiden Leitungsenden, nachfolgend Schleifen-Anschlüsse genannt, elektrisch leitend verbundene, elektronische Versorgungseinheit auf. Die Versorgungseinheit ist dazu ausgebildet, die Energie zur elektrischen Versorgung eines Regaletiketts, das an der Regalschiene korrespondierend zu der Leiterschleife montiert ist, mit Hilfe der Leiterschleife kontaktlos an das Regaletikett zu übertragen. "Kontaktlos" bedeute hier, dass dies mit Hilfe einer induktiven Kopplung zwischen zwei benachbart lokalisierten Leiterschleifen bzw. Spulen erfolgt. So kann das Regaletikett auch eine Leiterschleife bestehend aus einer einzigen Schleife oder einer Vielzahl von Windungen, also eine Spule, aufweisen. Weiterhin bedeutet "korrespondierend zu", dass das Regaletikett benachbart zu der durch die Leiterschleife aufgespannten Fläche positioniert ist und dort im Wesentlichen innerhalb einer durch die Leiterschleife begrenzten Zone lokalisiert ist. Die Leiterschleife selbst kann in der Ebene der Regalschiene, z.B. sichtbar, ausgebildet sein oder von einem schützenden Materialstreifen bedeckt sein. Wird das Regaletikett in die Regalschiene eingesetzt, so befindet sich die in dem Regaletikett verbaute Leiterschleife bzw. Spule automatisch in der für die induktive Kopplung zwischen den beiden nebeneinander positionierten Leiterschleifen bzw. Spulen nutzbaren Zone. Bevorzugt sind bei in die Regalschiene eingesetztem Regaletikett die durch die beiden Leiterschleifen bzw. Spulen (einerseits der Regalschiene angehörend und anderseits dem Regaletikett angehörend) aufgespannten Flächen parallel zueinander orientiert und im Abstand von weniger als einem Millimeter bis hin zu einigen Millimetern lokalisiert. Um die induktive Kopplung nicht zu behindern ist die Regalschiene selbst aus einem geeigneten Material, bevorzugt aus Kunststoff, gefertigt.

Der Umfang der Leiterschleife der Regalschiene kann sich beispielsweise entlang der gesamten Länge der Regalschiene und der gesamten Höhe der Regalschiene erstrecken. Bevorzugt wird die durch die Leiterschleife aufgespannte Fläche jedoch etwas kleiner sein als die durch die physikalischen Dimensionen der Regalschiene definierte Fläche ihrer Vorderseite. Bevorzugt ist die zumindest eine Leitschleife innerhalb des Kanals der Regalschiene lokalisiert, in den die Regaletiketten eingesetzt werden, und dort in die Wand des Kanals integriert, die bei eingesetztem Regaletikett korrespondierend (benachbart) zu deren Rückwand verläuft. Zur Realisierung der Leiterschleife kann eine einzige umlaufende Leiterbahn oder eine spulenartig mehrfach umlaufende Leiterbahn, also eine mehrere Windungen aufweisende Leiterbahn, vorgesehen sein. Die Leiterschleife weist an ihren beiden Enden je einen Schleifen-Anschluss auf, an den die Versorgung-Einrichtung angeschlossen ist.

Die Regalschiene kann mit einer einzigen Leiterschleife ausgestattet sein. Es hat sich jedoch als vorteilhaft erwiesen, wenn entlang der Längserstreckung der Regalschiene eine Mehrzahl von Leiterschleifen ausgebildet ist, die jede für sich mit der Versorgungseinheit (wie erwähnt) gekoppelt ist, und die Versorgungseinheit zur selektiven Energieübertragung mit Hilfe jeder der Leiterschleifen ausgebildet ist. Dies ermöglicht die wahlweise Energieversorgung für ein einziges Regaletikett oder eine Gruppe von Regaletiketten. Je nach Implementierung können entlang der Regalschiene beispielsweise 2 oder 3 oder bis zur 15 oder sogar wesentlich mehr Leiterschleifen realisiert sein. Diese Leiterschleifen sind entlang der Längserstreckung der Regalschiene nebeneinander positioniert und ihre jeweils beiden Schleifen-Anschlüsse entlang der Regalschiene zu der Versorgung-Einrichtung hingeführt und dort mit ihr elektrisch leitend verbunden. Die Längserstreckung der durch die jeweilige Leiterschleife abgedeckten Zone an der Regalschiene kann für alle Leiterschleifen identisch sein. So können entlang der Regalschiene viele eng beieinander liegende Zonen definiert sein, deren jeweilige Längserstreckung sich an der Längserstreckung des an der Regalschiene zur Anwendung kommenden Regaletiketts orientiert, wobei die Längserstreckung üblicherweise einige cm aufweist, wie z.B. 8-12 cm. Dies ermöglicht die individuelle (selektive) induktive Kopplung mit jedem einzelnen Regaletikett an (beinahe) beliebigen Positionen entlang der Regalschiene. Dies ist dann von Vorteil, wenn die Positionierung des Regaletiketts möglichst flexibel erfolgen soll und trotzdem eine möglichst individuelle induktive Kopplung mit jedem Regaletikett möglich sein soll. Es können jedoch auch größere Zonen vorgesehen sein, in denen sich dann mehrere Regaletiketten befinden können, die dann gemeinsam mit der betroffenen Leiterschleife eine induktive Kopplung eingehen können. Diese Konfiguration kann dann zur Anwendung kommen, wenn die exakte Position des jeweiligen Regaletiketts keine Rolle spielt. Ein solcher Fall ist dann gegeben, wenn z.B. auf einem Regal über einen längeren Abschnitt oder die Gesamtlänge des Regals hinweg mehrerer identische Produkte platziert sind und durch mehrere in größeren Abständen zueinander entlang der Längserstreckung der Regalschiene platzierte Regaletikettenanzeigen immer die gleiche Information zu diesen Produkten präsentiert wird. Entlang einer Regalschiene können jedoch auch gemischte Konfigurationen aus relativ kurzen Zonen und im Verhältnis dazu auch relativ langen Zonen vorliegen.

Die Leiterschleifen können alle gemeinsam, also gleichzeitig, zur Energieübertragung von der Versorgung-Einrichtung genutzt werden. Dies bedeutet jedoch für die Elektronik der Versorgung-Einrichtung ein entsprechend aufwändiges Design. Daher hat es sich als besonders vorteilhaft erwiesen, wenn die Versorgungseinheit zum Multiplexen der Energieübertragung über die Leiterschleifen ausgebildet ist. Es wird dabei immer nur eine einzige Leiterschleife, die elektronisch ausgewählt ist, zur Energieübertragung verwendet.

Wie auf analoge Weise bereits im Zusammenhang mit dem Regaletikett erörtert, kann die Versorgung-Einrichtung hinsichtlich ihrer zur Energieübertragung geeigneten Schnittstelle unterschiedlich ausgebildet sein. Bevorzugt ist die Versorgungseinheit jedoch als eine zweite NFC-Schnittstelle zur kontaktlosen Energieversorgung eines Regaletiketts ausgebildet, wobei die mindestens eine Leiterschleife ein zur kontaktlosen Energieübertragung (wie auch zur kontaktlosen Kommunikation) bestimmter Bestandteil der NFC-Schnittstelle ist.

Ganz allgemein ist hier festzustellen, dass die Leiterschleife somit eine Induktivität realisiert, die zur induktiven Kopplung mit der korrespondierenden Induktivität auf der Seite des Regaletiketts zum Einsatz kommt. Die Leiterschleife kann im Übrigen eine einzige Windung oder auch mehrere Windungen aufweisen.

Weiterhin kann die mindestens eine Leiterschleife in die Regalschiene integriert oder an ihr befestigt sein. Die Integration in die Regalschiene ist dann vorteilhaft, wenn die Regalschiene beispielsweise aus Kunststoff gefertigt ist und bereits beim z.B. Spritzgießen, also bei der Fertigung der Regalschiene, die Leiterschleife dort integriert wird. Die Leiterschleife kann jedoch auch auf der Oberfläche der Regalschiene, z.B. durch Aufkleben, befestigt werden. Insbesondere dann, wenn viele Leiterschleifen, die nebeneinander angeordnet sind, gefordert sind und dementsprechend auch viele Zuleitungen zu berücksichtigen sind, hat es sich als vorteilhaft erweisen, wenn die Leiterschleife(n) auf einer Leiterplatte ausgebildet ist (sind). Diese Leiterplatte kann dann als eigener Bauteil in die Regalschiene integriert oder an ihr befestigt werden. Auch kann die Regalschiene derart ausgebildet sein, dass die Leiterplatte austauschbar ist, sodass leicht auf unterschiedlichste Anforderungsprofile in der Regalplanung mit unterschiedlichsten Leiterschleifenkonfigurationen, die z.B. auf einer einzigen Leiterplatte oder auch auf verschiedenen Leiterplatten realisiert sein können, reagiert werden kann. Besonders bevorzugt weist jedoch die Regalschiene selbst eine Leiterschleifen-Aufnahme auf. Diese kann so ausgebildet sein, dass sie z.B. an der Vorderseite der Regalschiene lokalisierst ist, also dort wo die Rückseite des Regaletiketts im an der Regalschiene befestigten Zustand möglichst nahe an der Regalschiene positioniert ist. Die Leiterschleifen-Aufnahme kann jedoch auch korrespondierend zu jenem Bereich der Regalschiene, wo das Regaletikett angebracht werden kann, an der Rückseite der Regalschiene verlaufen, was eine bessere Zugänglichkeit der Leiterschleife für Wartungszwecke mit sich bringen kann oder auch einen unübertrefflichen Schutz gegen Beschädigung sicherstellt. Letztendlich ist die Leiterschleife dort auch vor den Blicken der Kunden eines Supermarkts verborgen. Strukturell kann die Leiterschleifen-Aufnahme z.B. durch eine spaltförmige Vertiefung im z.B. Kunststoffmaterial der Regalschiene realisiert sein, in welche Vertiefung die Leiterschleife eingesetzt ist. Damit kann auch die Form der Leiterschleife wie auch ihre exakte Position möglichst präzise ohne weitere Maßnahmen (wie z.B. die zuvor erwähnte Leiterplatte und ihre Positionierung) definiert werden. Auch kann die rückseitig positionierte Leiterschleife praktisch an jedem beliebigen Punkt mit einer Elektronik der Versorgung-Einrichtung elektrisch leitend verbunden werden, ohne dass auf die Position der vorderseitig an der Regalschiene positionierten Regaletiketten Rücksicht genommen werden muss. Die Vertiefung kann auch einen Schnapp- bzw. Fixierungsmechanismus aufweisen, der die Leiterschleife in ihrer Sollposition fixiert. Auch kann die Vertiefung derart ausgebildet sein, dass sie eine Mehrzahl an Windungen der Leiterschleife aufnehmen kann, wobei diese nebeneinander und/oder übereinander in der Vertiefung angeordnet sein können.

Auch ist man bei der Integration einer Leiterschleifen-Aufnahme direkt in die Regalschiene (also in ihr Material) bei Planung bzw. Herstellung der Leiterschleife nicht an die Grenzen des Herstellungsprozess für Leiterplatten gebunden und kann somit auch Leiterschleifen mit einer Länge realisieren, die jene für Leiterplatten von gegenwärtig ca. einem Meter bei weitem übertreffen. Es lässt sich somit durchaus auch eine Leiterschleife realisieren, die sich entlang einer gesamten Regalschiene erstreckt, die mehrere Meter lang sein kann.

Als besonders vorteilhaft hat es sich erwiesen, wenn pro Regalschiene genau eine einzige elektronische Versorgung-Einrichtung zum Einsatz kommt. Dies erlaubt eine fokussierte Energieversorgung nur für diese eine Regalschiene zu realisieren.

In diesem Zusammenhang hat es sich weiterhin als besonders vorteilhaft erwiesen, wenn die elektronische Versorgung-Einrichtung in die Regalschiene integriert oder an ihr befestigt ist. Somit lässt sich eine Regalschiene mit individueller elektronischer Energieversorgung realisieren. Dabei kann die Versorgung-Einrichtung z.B. auch direkt an der Leiterplatte ausgebildet sein oder als Modul mit ihr verbunden sein oder als Modul mit der Regalschiene mechanisch gekoppelt sein und mit der Leiterschleife der Regalschiene elektrisch leitend verbunden sein. Dadurch kann die Regalschiene als Ganzes inklusive ihrer Versorgung-Einrichtung vertragen und an einem anderen Ort problemlos wieder in Betrieb genommen werden.

Die Energieversorgung der Versorgung-Einrichtung kann auf unterschiedliche Weise realisiert sein. So kann die Versorgung-Einrichtung beispielsweise über ein Ethernet-Kabel erfolgen, das die Versorgung-Einrichtung mit anderen Kommunikationseinrichtungen verbindet, wobei über dieses Ethernet-Kabel auch die Versorgungsspannung bereitgestellt wird. Es kann jedoch auch eine separate Versorgungsstation (z.B. ein Netzgerät) zur Energieversorgung der elektronischen Versorgung-Einrichtungen vorgesehen sein. Bevorzugt versorgt diese Versorgungsstation eine Gruppe von elektronischen Versorgung-Einrichtungen, besonders bevorzugt für ein ganzes Regal, insbesondere für eine Gruppe von Regalen. Dies erlaubt den modularen Aufbau einer Versorgungsinfrastruktur für ein einziges Regal oder für geographisch oder thematisch sortierte Gruppen von Regalen oder auch nur die Reduktion der Anzahl der Versorgungsstationen auf ein nötiges Mindestmaß.

Besonders bevorzugt ist die elektronische Versorgung-Einrichtung jedoch auf funkbasierte Weise mit Energie versorgbar ausgebildet, und die Versorgungsstation ist ihrerseits als Funk-Energiequelle zur, insbesondere gerichteten, funkbasierten Energieversorgung der elektronischen Versorgung-Einrichtung ausgebildet. Mit Hilfe der Versorgungsstation erfolgt also eine kontaktlose zielgerichtete Energieübertragung hin zur Versorgung-Einrichtung. Dies ermöglicht eine im Wesentlichen kabelfreie Versorgungsinfrastruktur von einerseits der an der Regalschiene befestigten Regaletiketten und andererseits auch der für die Versorgung der Regaletiketten vorgesehenen Versorgung-Einrichtung. De facto erspart sich der Errichter des Systems die Verkabelung zwischen der tatsächlichen Energiequelle und dem jeweiligen Regal. Dieser Umstand ermöglicht eine im Wesentlichen wahlfreie Positionierung der Regale im Geschäft wie auch die wahlfreie und einfache Positionierung der Regalschienen an verschiedensten Regalen wie auch deren Austausch zwischen den Regalen. Diese Art der Energieübertragung wie auch die zugrundeliegende Technologie ist unter dem Begriff "Power over WiFi" bekannt. Mit dieser Technologie ausgerüstete Funk-Energiequellen lassen sich beispielsweise an der Decke eines Geschäftslokals installieren und versorgen in einem Umkreis von bis zu maximal 10 Meter selektiv die dort den jeweiligen Regalschienen zugeordneten und in diesem Umkreis lokalisierten Versorgung-Einrichtungen mit Hilfe von zu ihnen hingerichteten leistungsstarken, also fokussierten Funksignalen.

Weiterhin kann die elektronische Versorgung-Einrichtung auch zum kontaktlosen Kommunizieren mit dem Regaletikett unter Ausnutzung jener Technologie, die auch zur Energieübertragung an das Regaletikett zum Einsatz kommt, ausgebildet sein. Bevorzugt kommt hierbei wieder die bereits erwähnte NFC-Technologie zum Einsatz. Dies erlaubt eine möglichst optimale Ausnutzung der verfügbaren elektronischen Komponenten für sowohl die kontaktlose Energieübertragung als auch die kontaktlose Kommunikation über relativ kurze Distanzen, so wie dies bei an der Regalschiene befestigten Regaletiketten der Fall ist.

Zusätzlich zu der NFC-Schnittstelle, die für die Kommunikation mit den Regaletiketten vorgesehen ist, weist die Versorgung-Einrichtung eine weitere Schnittstelle auf, die zur Kommunikation mit einem Access-Point bestimmt ist. Diese weiter Schnittstelle kann zur Funkkommunikation ausgebildet sein. Für die Funk-Kommunikation mit dem Access-Point kann ein Zeitschlitz-Kommunikationsverfahren, insbesondere ein proprietäres Zeitschlitz-Kommunikationsverfahren wie es aus der WO2015/124197, Seiten 2 bis 4, bekannt ist, deren spezifische Offenbarung mittels Bezugnahme hiermit aufgenommen ist ("incorporated by reference"). Für die Funkkommunikation kann aber auch ein Kommunikationsprotokoll basierend auf den Standards bzw. Spezifikationen ZigBee, Bluetooth oder WiFi usw. zur Anwendung kommen. Die zweite Schnittstelle kann jedoch auch zur kabelgebundenen Kommunikation ausgebildet sein, sodass die Kommunikation über ein Ethernet-Kabel erfolgen kann. Über das Ethernet-Kabel kann auch wie erwähnt die benötigte Versorgungsspannung zugeführte werden, was in Fachkreisen unter dem Begriff "Power over Ethernet", abgekürzt "PoE", bekannt ist.

Die Versorgung-Einrichtungen realisiert somit kommunikationstechnisch betrachtet einen "Gateway" für die Gesamtheit der an der betreffenden Regalschiene montierten Regaletiketten.

Der Access-Point dient als übergeordnete Schnittstelle zwischen den Regaletiketten einer die Regaletiketten steuernden IT-Infrastruktur, wie beispielsweise Server mit entsprechender Software-Applikation und dergleichen. Typischerweise ist in einem funkbasierten System eine Gruppe von Regaletiketten einem solchen Access-Point funktechnisch (logisch) zugeordnet, sodass die Kommunikation mit dieser Gruppe von Regaletiketten nur über diesen Access-Point erfolgt. In einem Geschäftslokal eines zum Beispiel Supermarkts können mehrere solche Access-Points installiert sein, wobei jeder Access-Point für die Kommunikation mit ihm logisch zugeordneten Regaletiketten vorgesehen ist, die in einem geographischen (funktechnisch erreichbaren) Bereich um ihn herum lokalisiert sind.

Der Access-Point kann zusätzlich zu dieser Funktionalität auch die Versorgungsstation aufweisen, die zur gerichteten, funkbasierten Energieversorgung der elektronischen Versorgung-Einrichtung ausgebildet ist.

Summarisch betrachtet realisiert die Versorgung-Einrichtung bei der betreffenden Regalschiene eine kombinierte Energieversorgung- und Kommunikationsversorgung-Einrichtung für die an der betreffenden Regalschiene befestigten Regaletiketten. Die Versorgung-Einrichtung ist somit für eine lokale kontaktlose Energieübertragung wie auch lokale kontaktlose Kommunikation mit an der Regalschiene befestigten Regaletiketten konfiguriert bzw. ausgebildet. Eine solche Versorgung-Einrichtung kann auch als Regalschienen-Steuereinrichtung oder auch Regalschienen-Controller bezeichnet werden, weil sie alle Aktivitäten der an der betreffenden Regalschiene montierten Regaletiketten steuert, was sowohl das Anzeigeverhalten, das Kommunikationsverhalten, als auch die jeweilige Energieversorgung umfasst.

Als besonders vorteilhaft hat es sich zudem erwiesen, wenn die elektronische Versorgung-Einrichtung zum Empfangen und Weiterleiten einer eindeutigen Kennung des an der Kommunikation beteiligten Regaletiketts zwecks Bestimmung der Position des betreffenden Regaletiketts ausgebildet ist.

Sind innerhalb einer Leiterschleife der Regalschiene mehrere Regaletiketten angeordnet bzw. werden mehrere Regaletiketten gleichzeitig mit Energie über eine einzige Leiterschleife versorgt, müssen Vorkehrungen getroffen werden, um den Empfang der jeweiligen Kennung sicherzustellen. Zu diesem Zweck können die Regaletiketten beispielsweise so programmiert sein, dass sie ihre Kennung zu zufällig ausgewählten Zeitpunkten innerhalb eines Zeitfensters (einfach oder mehrfach) abgeben, um den individuellen Empfang bei der Versorgung-Einrichtung sicherzustellen. Ebenso kann bei dieser kontaktlosen Übertragung ein z.B. aus der RFID-Technologie bekanntes Anti-Kollision-Verfahren zur Anwendung kommen, um den individuellen Empfang bei der Versorgung-Einrichtung sicherzustellen.

Die Weiterleitung der eindeutigen Kennung erfolgt dabei bevorzugt an eine Datenverarbeitungseinrichtung, wie beispielsweise einen Server des Geschäftslokals, der die Kommunikation mit den einzelnen elektronischen Regaletiketten durchführt.

Der Server kann auch die logische Verknüpfung zwischen Produkten, die auf dem jeweiligen Regal ausgestellt sind, und den dort positionierten Regaletikettenanzeigen speichern und somit sicherstellen, dass die jeweilige Regaletikettenanzeige jene Informationen präsentiert, die zu dem betreffenden Produkt gehören.

Der Server ist auch über die Position oder Erstreckung der jeweiligen Leiterschleife an der Regalschiene informiert und wird von der Versorgung-Eirichtung zusammen mit der Kennung auch darüber informiert, welche Leiterschleife zum Bezug der Kennung von dem Regaletikett benutzt wurde. Damit lassen sich auch dreidimensionale digitale Landkarten der Positionen der Gesamtheit der Regaletiketten in einem Geschäftslokal erstellen. Dies betrifft sowohl die zum Anzeigen von Information konfigurierten Regaletiketten wie auch auf analoge Weise die anderen erwähnten möglichen Funktionalitäten des Regaletiketts.

Die Anmeldung offenbart somit auch eine "intelligente" Regalschiene, an der zumindest ein elektronisches Regaletikett befestigbar ist und die aufweist:
- zumindest eine an der Regalschiene ausgebildete Leiterschleife, und
- eine Versorgung-Einrichtung, die zur kontaktlosen Energieversorgung des zumindest einen Regaletiketts ausgebildet ist, wobei die Leiterschleife ein Bestandteil der Versorgung-Einrichtung ist und zur kontaktlosen Versorgung eines Regaletiketts mit Energie dient, das an der Regalschiene korrespondierend zu der Leiterschleife montiert ist.

Bevorzugt kann die Ausbildung der Versorgung-Einrichtung zur Energieversorgung mit Hilfe eines NFC-Interfaces realisiert sein, so wie dies bereits erörtert wurde, wobei die Leiterschleife ein Bestandteil des NFC-Interfaces ist.

Die Elektronik der verschiedenen Vorrichtungen des Systems wie auch deren Interface usw. kann mit Hilfe unterschiedlichster passiver wie auch aktiver elektronischer Bauteile auf diskrete wie auch integrierte Weise realisiert sein. Bevorzugt kommt dabei auch ein Mikroprozessor mit entsprechenden Peripheriebausteinen oder ein Mikrokontroller zum Einsatz, worauf eine Software zur Bereitstellung der verschiedenen Funktionalitäten abgearbeitet wird. Auch können sogenannte ASICs (Application-Specific Integrated Circuits) zur Anwendung kommen.

Diese und weitere Aspekte der Erfindung ergeben sich durch die nachfolgend erörterten Figuren.

### Figurenkurzbeschreibung

Die Erfindung wird im Folgenden unter Hinweis auf die beigefügten Figuren anhand von Ausführungsbeispielen noch einmal näher erläutert, auf welche die Erfindung jedoch nicht beschränkt ist. Dabei sind in den verschiedenen Figuren gleiche Komponenten mit identischen Bezugszeichen versehen. Es zeigen auf schematische Weise:
- Fig. 1: ein erfindungsgemäßes elektronisches Regaletiketten-System gemäß einem ersten Ausbildungsbeispiel;
- Fig. 2: ein Blockschaltbild einer Regaletikettenanzeige;
- Fig. 3: ein Blockschaltbild einer "intelligenten" Regalschiene mit einer Versorgung-Einrichtung;
- Fig. 4: ein zweites Ausbildungsbeispiel des Regaletiketten-Systems;
- Fig. 5: ein zweites Ausbildungsbeispiel der "intelligenten" Regalschiene;
- Fig. 6: eine Leiterplatte der "intelligenten" Regalschiene;
- Fig. 7: die Leiterplatte gemäß der Fig. 6 integriert in die Regalschiene;
- Fig. 8: die "intelligente" Regalschiene mit direkter Integration einer Leiterschleife.

### Beschreibung der Ausführungsbeispiele

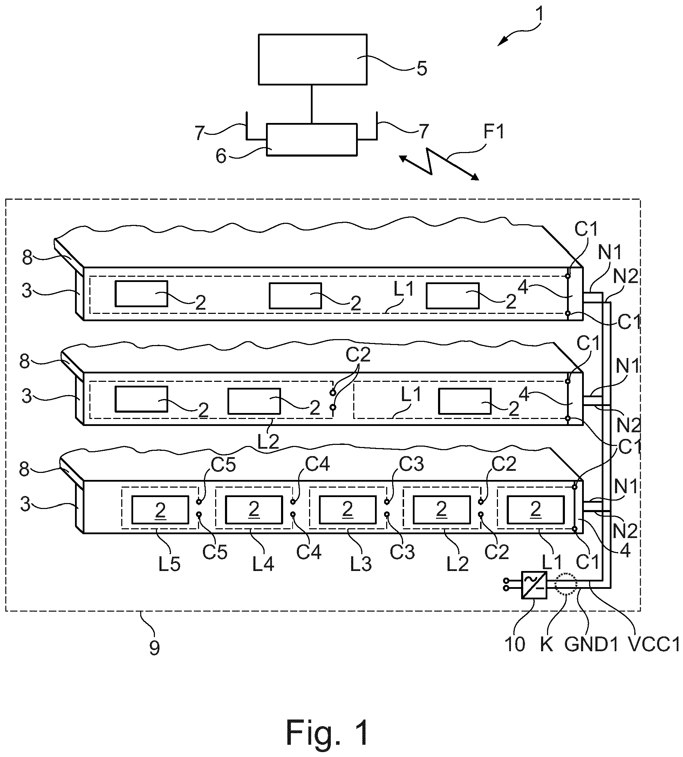

In der Figur 1 ist ein Regaletiketten-System 1 dargestellt, das eine Anzahl von identisch ausgebildeten elektronischen Regaletiketten realisiert als Regaletikettenanzeigen 2 umfasst, die an drei "intelligenten" Regalschienen 3 befestigt sind. Jede Regalschiene 3 weist eine elektronische Versorgung-Einrichtung 4 auf. Ebenfalls dargestellt ist eine Datenverarbeitungseinrichtung, die mit Hilfe eines Server 5 realisiert ist, der kabelgebunden mit einem Access-Point 6, der beispielhaft zwei Antennen 7 aufweist, verbunden ist. Die dargestellten Versorgung-Einrichtungen 4 stehen mit dem Access-Point 6 über erste Funksignale F1 im Funkkontakt. Damit lassen sich von dem Server 5 aus die Bildinhalte der Regaletikettenanzeigen 2 verändern, gegebenenfalls auch zugehörige Statusinformationen von den Regaletikettenanzeigen 2 abfragen und an den Server 5 übertragen. Jede der Regalschienen 3 ist an einem individuellen Regalboden 8 an dessen Vorderkante montiert. Die drei dargestellten Regalböden 8 gehören alle zu einem nur sehr schematisch angedeuteten Regal 9. Auf dem Regalboden 8 können verschiedene Produkte abgelegt werden, die jedoch im vorliegenden Fall nicht dargestellt sind.

Für die elektrische Versorgung der Versorgung-Einrichtungen 4 ist ein dem Regal 9 zugeordnetes separates Netzteil 10 als Versorgungsstation vorgesehen, das eine eingangsseitige Netz-Wechselspannung (von z.B. 230 V) auf eine für die Versorgung-Einrichtungen 4 geeignete Gleichspannung als erste Versorgungsspannung VCC1 (von zum Beispiel 12 V) gegenüber einem ersten Bezugspotential GND1 umwandeln. Diese erste Versorgungsspannung VCC1 wird den Versorgung-Einrichtungen 4 mit Hilfe eines Kabels K über ihre Versorgung-Anschlüsse N1 und N2 zugeführt.

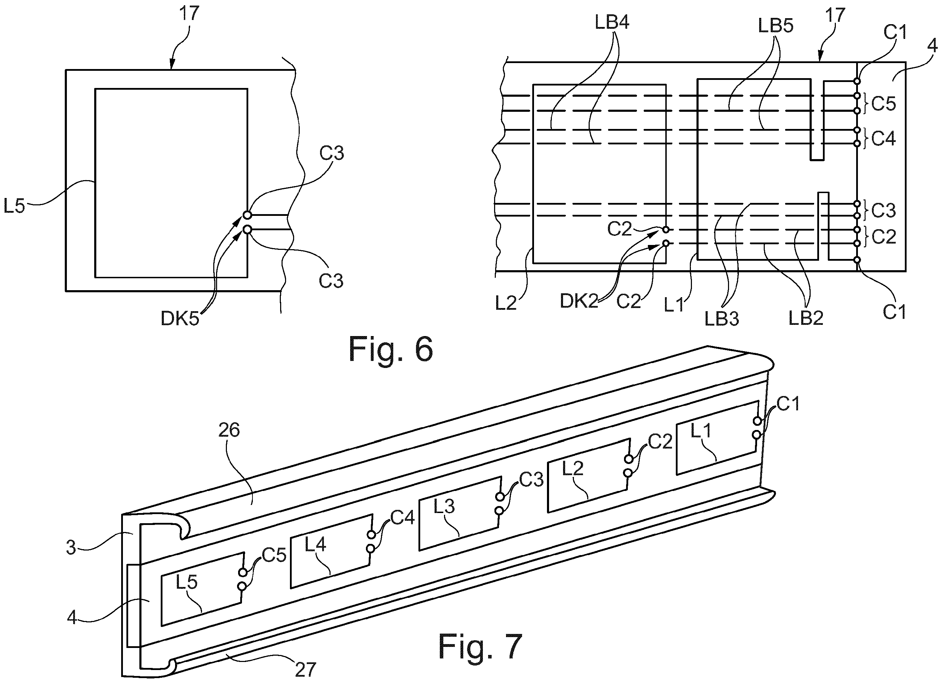

Die Versorgung-Einrichtungen 4 sind jeweils am rechten Rand der Regalschienen 3 schematisch dargestellt, was jedoch nicht zwingend so sein muss. Sie können sich also auch an anderen Positionen entlang der Regalschiene 3 befinden. Die Versorgung-Einrichtungen 4 sind im vorliegenden Fall in die Regalschienen 3 integriert, also zum Beispiel in einen Montageschacht (hier nicht dargestellt, siehe jedoch Fig. 7) verbaut bzw. eingesetzt.

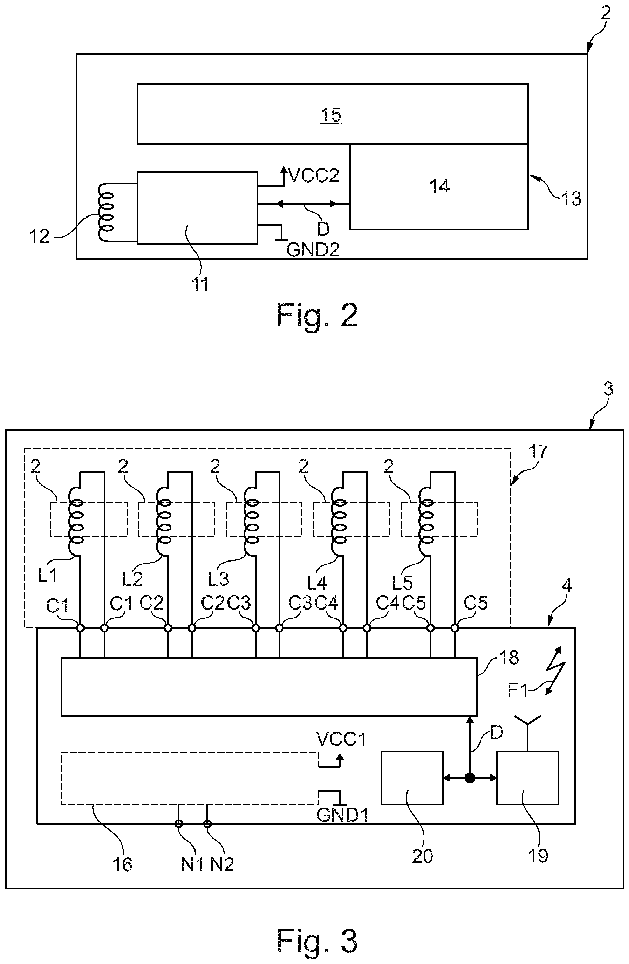

Weiterhin zeigt die Figur 1 eine in die oberste Regalschiene 3 integrierte erste Leiterschleife L1, die mit ihren beiden (ersten) Schleifen-Anschlüssen C1 mit der dort verbauten Versorgung-Einrichtung 4 verbunden ist. Die mittlere Regalschiene 3 weist zusätzlich zu der ersten Leiterschleife L1 eine zweite Leiterschleife L2 auf, die ebenso wie die erste Leiterschleife L1 über ihre beiden (zweiten) Schleifen-Anschlüsse C2 mit der dort verbauten Versorgung-Einrichtung 4 verbunden ist, wobei diese Verbindung aus Gründen der Übersichtlichkeit nicht im Detail dargestellt ist (siehe jedoch Fig. 3). Gleiches gilt sinngemäß für die unterste Regalschiene 3, die zusätzlich zu den beiden genannten Leiterschleifen L1 und L2 eine dritte, vierte und fünfte Leiterschleife L3, L4 und L5 aufweist, deren jeweils beide (dritte, vierte und fünfte) Schleifen-Anschlüsse C3, C4 und C5 mit der dort verbauten Versorgung-Einrichtung 4 verbunden sind, wobei auch diese Verbindung aus Gründen der Übersichtlichkeit nicht im Detail dargestellt ist (siehe jedoch Fig. 3).

Die Leiterschleifen L1 bis L5 sind in der relativ flachen Struktur der Regalschiene 3 mit Hilfe einer Leiterplatte (hier nicht dargestellt, siehe jedoch Fig. 3, 6 und 7), welche die Leiterbahnen (im vorliegenden Fall nur eine einzige Leiterbahn pro Leiterschleife L1 bis L5) der Leiterschleifen L1 bis L5 trägt, integriert. Die Versorgung-Einrichtung 4 kann mit dieser Leiterplatte verlötet sein oder über Kabel oder Stecker verbunden sein, sodass die Schleifenanschlüsse C1 bis C5 elektrisch kontaktiert sind.

Die Regalschiene 3 ist ebenso wie die Regaletikettenanzeige 2 derart ausgebildete, dass die Regaletikettenanzeige 2 von vorne in die Regalschiene 3 eingesetzt werden kann und dabei über einen Schnappmechanismus derart mit ihr verriegelt, dass sie nur mit erheblichem Kraftaufwand wieder von der Regalschiene 3 entfernt werden kann. Dies ist beispielsweise mit einer oberen Führungsleiste 26 und einer unteren Führungsleiste 27 (siehe Fig. 7) der Regalschiene 3 realisierbar, wobei sich zumindest eine der beiden Führungsleisten 26 oder 27, gegebenenfalls auch beide, beim Einsetzen bzw. Herausnehmen des Regaletiketts 2 leicht verbiegen lassen. Zugleich erlaubt der erwähnte Mechanismus, dass die Regaletikettenanzeige 2 entlang der Regalschiene 3 mit im Verhältnis dazu nur geringem Kraftaufwand verschoben und folglich leicht an beliebiger Position platziert werden kann. Ein Schnappmechanismus der beschriebenen Art ist beispielsweise aus der WO2017/153481A1, Figur 2, bekannt, wobei dort die untere und obere Kante der Führungsleisten 26 bzw. 27 mit Bezugszeichen 12 und 13 gekennzeichnet sind. Passend zu den Führungsleisten 26 und 27 kann auch die Regaletikettenanzeige 2 entlang ihres oberen und unteren Randes und von ihrer Front aus gesehen leicht nach hinten versetzt entsprechende Einkerbungen bzw. Ausnehmungen aufweisen, in welche die Führungsleisten einschnappen können. Auch können die Führungsleisten 26 und 27 die obere und die untere Kante der Regaletikettenanzeige 2 vollständig umfassen, um ihren Halt an der Regalschiene 3 zu sichern.

Im Folgenden ist ein Blockschaltbild der Regaletikettenanzeige 2 anhand der Figur 2 erörtert.

Das Blockschaltbild zeigt eine erste NFC-Schnittstelle 11 mit ihrer Kopplungsspule 12. Mit Hilfe der Kopplungsspule 12 lässt sich eine induktive Kopplung mit einem anderen NFC-fähigen Gerät, im vorliegenden Fall der Versorgung-Einrichtung 4, konkret mit den dort ausgebildeten Leiterschleifen L1 bis L5, etablieren, wenn die Kopplungsspule 12 entsprechend nahe an eine der Leiterschleifen L1 - L5 herangebracht wird, was bei der an einer der Regalschienen 3 angebrachten Regaletikettenanzeige 2 der Fall ist. Während der induktiven Kopplung wird mit Hilfe der NFC-Schnittstelle 11 eine zweite Versorgungsspannung VCC2 (gegenüber einem lokalen zweiten Bezugspotential GND2) für den Betrieb der gesamten Regaletikettenanzeige 2 erzeugt, was die Elektronik der Regaletikettenanzeige 2 aktiviert, so dass auch eine kontaktlose bidirektionale Kommunikation von Daten D über ihre erste NFC-Schnittstelle 11 durchführbar ist. Bestandteil dieser Elektronik ist auch ein NFC-Controller, der die gesamte NFC-Funktionalität bereitstellt, hier jedoch nicht im Detail dargestellt ist, jedoch in der ersten NFC-Schnittstelle 11 integriert ist.

Das Blockschaltbild zeigt auch eine mit der ersten NFC-Schnittstelle 11 verbundene Anzeigeeinheit 13, die sich in einen Electronic-Paper-Display-Controller 14 und einen damit steuerbaren Electronic-Paper-Display-Bildschirm 15 gliedert. Mithilfe des Controllers 14 werden die empfangenen Daten interpretiert, gegebenenfalls die Bildinhalte des Bildschirms 15 entsprechend verändert oder auch Statusinformationen in Form von Daten D über die erste NFC-Schnittstelle 11 an die Versorgung-Einrichtung 4 abgegeben.

Im Folgenden ist ein Blockschaltbild der untersten Regalschiene 3 gemäß der Figur 1, insbesondere auch der Versorgung-Einrichtung 4, anhand der Figur 3 erörtert.

Wie erwähnt wird über die Versorgung-Anschlüsse N1 und N2 die für den Betrieb nötige (zweite) Versorgungsspannung VCC2 zugeführt. Für den Fall, dass kein externes Netzteil 10 (siehe Figur 1) verwendet wird, sondern die Netz-Wechselspannung direkt zugeführt wird, kann auch die Versorgung-Einrichtung 4 ihr eigenes, internes Netzteil 16 aufweisen, das im vorliegenden Fall mit unterbrochener Linie angedeutet ist.

In der Visualisierung der Figur 3 ist auch die zuvor erwähnte Leiterplatte mit dem Bezugszeichen 17 angedeutet dargestellt. Wie erwähnt trägt die Leiterplatte 17 die Leiterschleifen L1 bis L5, wobei diese im vorliegenden Fall mit mehreren Schleifen bzw. Windungen ausgeführt sind, was jeweils mit dem Symbol einer elektrischen Spule angedeutet ist.

Korrespondierend zu der Position der jeweiligen Leiterschleife L1 bis L5 ist auch die jeweils dort positionierte Regaletikettenanzeige 2 angedeutet dargestellt. Im Unterschied zur Figur 1 ist auch die elektrische Verbindung der Schleifen-Anschlüsse C1 bis C5 mit der Versorgung-Einrichtung 4, konkret mit einer elektronischen Versorgungseinheit, die als (zweite) NFC-Schnittstelle 18 realisiert ist, konkret dargestellt. Auch diese zweite NFC-Schnittstelle 18 weist ihren eigenen NFC-Controller (nicht dargestellt) auf. Die zweite NFC-Schnittstelle 18 ist bei Vorliegen einer induktiven Kopplung mit der ersten NFC-Schnittstelle 11 der Regaletikettenanzeige 2 zur kontaktlosen Übertragung von elektrischer Energie an die Regaletikettenanzeige 2 sowie zur bidirektionalen Kommunikation von Daten mit der durch Energiezufuhr aktivierten Regaletikettenanzeige 2 ausgebildet. Dabei werden die Leiterschleifen L1 bis L5 mit Hilfe der speziell dazu ausgebildeten zweiten NFC-Schnittstelle 18 gemultiplext, es kommt also immer nur eine einzige der Leiterschleifen L1 bis L5 zum Einsatz.

Die Versorgung-Einrichtung 4 weist weiterhin ein Accesspoint-Kommunikationsinterface 19 auf, das zum funkbasierten Kommunizieren mit dem in der Figur 1 dargestellten Access-Point 6 ausgebildet ist. Das Accesspoint-Kommunikationsinterface 19 weist zu diesem Zweck eine dafür ausgebildete Elektronik und eine Antennenkonfiguration, die auch mehrere Antennen umfassen kann, auf. Zur Steuerung der internen Abläufe wie auch der Energieversorgung der Regaletikettenanzeige 2 und der Kommunikation mit der Regaletikettenanzeige 2, sowie der Kommunikation mit dem Access-Point 6 weist die Versorgung-Einrichtung 4 eine Steuereinheit 20 auf. Die Steuereinheit 20 ist mit Hilfe eines Mikrocontrollers realisiert, der über einen bidirektionalen Datenbus mit der zweiten NFC-Schnittstelle 18 und dem Accesspoint-Kommunikationsinterface 19 verbunden ist.

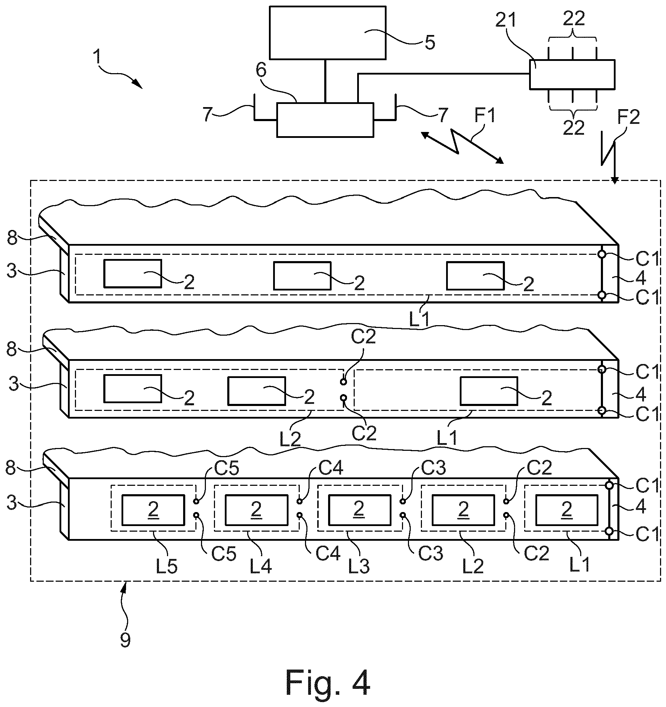

In der Figur 4 ist eine weitere Ausführungsform des Systems 1 dargestellt. Im Unterschied zu dem in der Figur 1 dargestellten System 1 fehlt hier das Netzteil 10. Im vorliegenden Fall erfolgt die Versorgung der einzelnen Versorgung-Einrichtungen 4 mit elektrischer Energie unter Zuhilfenahme eines Versorgungssenders 21 (zuvor als Funk-Energiequelle bezeichnet) als Versorgungsstation, der dazu ausgebildet ist, mit Hilfe eines fokussierten bzw. gerichteten (zweiten) Funksignals F2 mit einer bestimmten Sendeleistung, wie zum Beispiel 5 W, elektrische Energie an einen Empfänger (also eine der Versorgung-Einrichtungen 4) zu übertragen. Ein solcher Versorgungssender 21 weist auch eine Vielzahl von Antennen 22 (hier sind sechs dargestellt) auf, mit deren Hilfe die Richtung der Energieübertragung (letztendlich die Ausbreitung des zweiten Funksignals F2) relativ genau einstellbar ist, so dass das Energie übertragenden zweiten Funksignale F2 präzise bei der jeweiligen Versorgung-Einrichtung 4 ankommt. Diese Energieübertragung ist unter dem Begriff "Power over WiFi" bekannt.

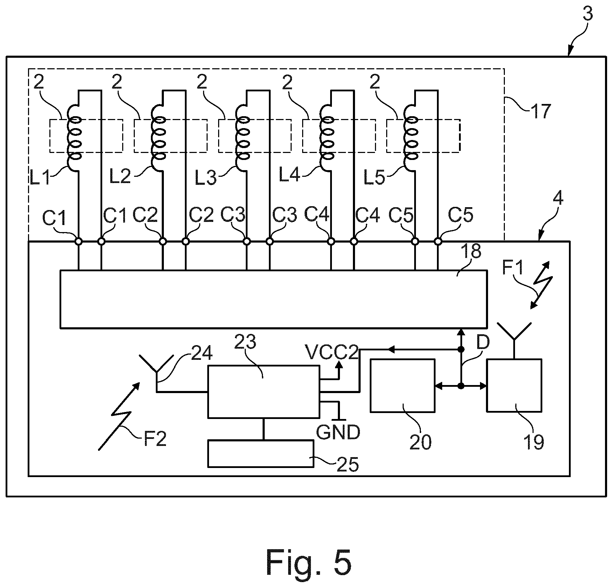

Um diese Art der Energieübertragung nutzen zu können, weist die in dem Ausführungsbeispiel der Figur 5 zur Anwendung kommende Versorgung-Einrichtung 4 einen zum Empfangen des zweiten Radiosignals F2 geeigneten Versorgungsempfänger 23 auf, der mit einer Antennenkonfiguration 24 (die mehrere Antennen aufweisen kann) und einer Elektronik ausgerüstet ist, die dazu ausgebildet ist, das zweite Funksignal F2 zu empfangen und die damit übertragene Energie in einem internen elektrischen Energiespeicher 25 (aufladbaren Batterie, Akkumulator) zu speichern und damit die zweite Versorgungsspannung VCC2 gegenüber einem zweiten Bezugspotential GND2 zu generieren.

Im Betrieb kann die Versorgung-Einreichung 4 beispielsweise mit Hilfe ihrer Steuereinheit 20 den Ladezustand des Energiespeichers 25 abfragen bzw. überwachen. Sobald der Ladezustand unter ein bestimmtes Niveau sinkt, kann die Steuereinheit 20 mit Hilfe des ersten Funksignal F1 eine (Neu-) Aufladung anfordern. Diese Anforderung wird vom Access-Point 6 empfangen und kann je nach Implementierung direkt an den Versorgungsender 21 weitergeleitet werden oder unter Einbeziehung des Servers 5 an den Versorgungssender 21 weitergeleitet werden. Da im System 1 (z.B. dem Server 5) die genaue geographische Position (die dreidimensionalen Koordinaten) jeder der Versorgung-Einrichtungen 4 sowie ihre eindeutige Kennung bekannt ist, kann der Versorgungsender 21 das zweite Funksignal F2 präzise gerichtet hin zur Position der jeweiligen das Aufladen anfordernden Versorgung-Einrichtung 4 aussenden. Dort wird das zweite Funksignal F2 empfangen und die mit seiner Hilfe übertragene Energie zur Aufladung des dortigen internen Energiespeichers 25 verwendet.

Die hier beschriebene Regalschiene 3 ist also zur kontaktlosen Kommunikation mit den an ihr installierte Regaletikettenanzeigen 2 und einem ihr funktechnisch zugeordneten Access-Point 6 und zur kontaktlosen Energiebereitstellung im Sinne von Energiespeicherung für ihren eigenen Betrieb wie auch für die Energieversorgung der jeweiligen Regaletikettenanzeige 2, während sich die besagte Regaletikettenanzeige 2 in einem Kommunikationszustand und / oder in einem Updatezustand ihres Bildschirms 15 befindet bzw. ganz allgemein ihre Elektronik aktiv ist, ausgebildet.

An dieser Stelle sei auch erwähnt, dass der Versorgungssender 21 auch in dem Access-Point 6 verbaut sein kann.

In der Figur 6 ist eine Leiterplatte 17 abgebildet, die beidseitig Leiterbahnen aufweist. Aus Gründen der Übersichtlichkeit sind von den fünf Leiterschleifen L1 - L5 lediglich drei dargestellt. An ihrer Vorderseite sind die großflächigen Leiterschleifen L1, L2 und L5 zu sehen. An ihrer Rückseite sind die eng aneinander verlaufenden Leiterbahnen LB2 - LB5 der jeweiligen Schleifen-Anschlüsse C2 und C5 zu sehen, die entlang der Längserstreckung der Leiterplatte 17 verlaufen. Die Schleifen-Anschlüsse C1 verlaufen auf der Vorderseite. Die Schleifen-Anschlüsse C1 - C5 sind alle mit der Versorgung-Einrichtung 4 verbunden. Dort, wo die Schleifen-Anschlüsse C2 und C5 bei den Leiterschleifen L2 und L5 enden, befinden sich Durchkontaktierungen DK2 und DK5 von der Vorderseite auf die Rückseite, sodass die Leiterschleifen L2 und L5, elektrisch leitend mit ihren Schleifen-Anschlüssen C2 und C5 verbunden sind. Gleiches gilt sinngemäß für die nicht visualisierten Leiterschleifen L3 und L4, ihre Schleifen-Anschlüsse C3 und C4, ihre Leiterbahnen LB3 und LB4 und die beiden ebenfalls nicht visualisierten Durchkontaktierungen DK3 und DK4. Die an der Leiterplatte 17 angedeutete Versorgung-Einrichtung 4 kann z.B. an der Rückseite der Leiterplatte 17 angebracht sein. Auch können die elektronischen Bauteile ihrer Elektronik direkt auf die Leiterplatte 17 angelötet sein.

Die Figur 7 zeigt eine Möglichkeit der mechanischen Integration der Leiterplatte 17 in die Regalschiene 3. Dabei bildet die Leiterplatte 17 einen Teil der Wand eines Aufnahmeschachts, der zur Aufnahme einer Anzahl von Regaletikettenanzeigen 2 dient. Der Aufnahmeschacht weist an der Stelle, wo die Leiterplatte 17 anzubringen ist, eine der Dicke der Leiterplatte 17 entsprechende Vertiefung auf, in welche die Leiterplatte 17 eingesetzt ist, so dass ihre Vorderseite im Wesentlichen plan mit dem Rest des Wand des Aufnahmeschachts verläuft. An der Vorderseite der Regalschiene 3 ist an ihrem oberen Ende die obere Führungsleiste 26 und an ihrem unteren Ende die untere Führungsleiste 27 ausgebildet. Diese Führungsleisten 26 und 27 lassen sich leicht nach oben und unten verbiegen, sodass die Regaletikettenanzeige 2 einrasten kann. Zugleich lässt sich die Regaletikettenanzeige 2 leicht entlang der Regalschiene 3 verschieben und völlig frei platzieren. Die Unterbringung der Versorgung-Einrichtung 4 an der Rückseite der Leiterplatte 17 ist dann von Vorteil, wenn die Regaletikettenanzeigen 2 entlang der Vorderseite der Regalschiene 3 ungehindert verschiebbar sein sollen, so wie dies im vorliegenden Fall möglich ist. Für diesen Fall muss die Vertiefung des Aufnahmeschachts entsprechend angepasst sein, damit auch die elektronischen Bauteile der Versorgung-Einrichtung 4 darin Platz finden.

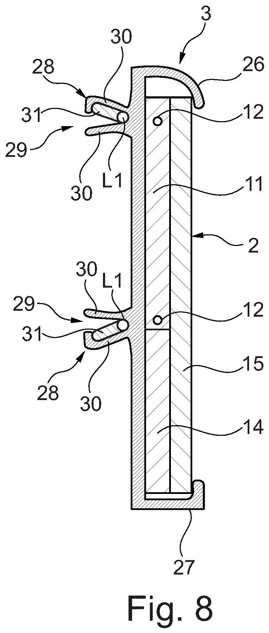

Die Figur 8 zeigt in einer Querschnittsdarstellung die Regalschiene 3 mit einer Leiterschleifen-Aufnahme 28 an ihrer Rückseite, wobei die Leiterschleifen-Aufnahme 28 direkt aus dem Material der Regalschiene 3 (also aus dem Kunststoff) gefertigt ist. Die Leiterschleifen-Aufnahme 28 weist eine spaltförmige Vertiefung 29 auf, in welche ein Draht der Leiterschleife L1 unverrückbar eingelegt ist. Die spaltförmige Vertiefung 29 wird von zwei Wänden 30 flankiert, die derart dimensioniert sind, dass mit ihrer Hilfe ein Schnappmechanismus, der den Draht in seiner Sollposition fixiert, realisiert ist. Zu diesem Zweck ist ein band- oder streifenförmiges Material 31 (Band oder Materialstreifen) in die spaltförmige Vertiefung 29 eingesetzt, das einerseits den Draht der Leiterschleife L1 gegen den Boden der Vertiefung 29 presst und sich selbst andererseits an einem nasen- bzw. hakenartigem Ende von jeweils der äußeren Wand 30 abstützt bzw. dort einrastet.

Sowohl in der Figur 7 wie auch in der Figur 8 wurde auf die Darstellung eines Befestigungsmechanismus für die Regalschiene 3, der die Befestigung der Regalschiene 3 an einer anderen Struktur, wie z.B. einem Regalboden 8 erlaubt, verzichtet, weil dieses Detail nicht die Erfindung betrifft und auf vielfältige dem Fachmann zugängliche Art und Weise realisierbar ist.

Es wird abschließend noch einmal darauf hingewiesen, dass es sich bei den vorangehend detailliert beschriebenen Figuren nur um Ausführungsbeispiele handelt, welche vom Fachmann in verschiedenster Weise modifiziert werden können, ohne den Bereich der Erfindung zu verlassen. Es wird der Vollständigkeit halber auch darauf hingewiesen, dass die Verwendung der unbestimmten Artikel "ein" bzw. "eine" nicht ausschließt, dass die betreffenden Merkmale auch mehrfach vorhanden sein können.

## Patentansprüche

1. Elektronisches Regaletiketten-System (1), das aufweist:
- zumindest ein elektronisches Regaletikett (2), insbesondere realisiert als elektronische Regaletikettenanzeige, wobei das Regaletikett (2) auf kontaktlose Weise mit Energie versorgbar ausgebildet ist, und
- zumindest eine Regalschiene (3), an der zumindest ein solches Regaletikett (2) befestigt ist, und
- eine der Regalschiene (3) zugeordnete, insbesondere nur dieser einen Regalschiene (3) zugeordnete, elektronische Versorgung-Einrichtung (4), die zur kontaktlosen Energieversorgung des zumindest einen dort befestigten elektronischen Regaletiketts (2) ausgebildet ist, wobei die elektronische Versorgung-Einrichtung (4) auch zum kontaktlosen Kommunizieren mit dem Regaletikett (2) unter Ausnutzung jener Technologie, die auch zur Energieübertragung an das Regaletikett (2) zum Einsatz kommt, ausgebildet ist, **dadurch gekennzeichnet, dass**
die elektronische Versorgung-Einrichtung (4) zum Empfangen und Weiterleiten einer eindeutigen Kennung des an der Kommunikation beteiligten Regaletiketts (2) zwecks Bestimmung der Position des betreffenden Regaletiketts (2) ausgebildet ist.

2. System (1) nach Anspruch 1, wobei das Regaletikett (2) eine erste NFC-Schnittstelle (11) für seine kontaktlose Energieversorgung aufweist.

3. System (1) nach Anspruch 1 oder 2, wobei das Regaletikett (2) eine energiesparende Anzeigeeinheit (13), insbesondere basierend auf Electronic-Ink- bzw. Electronic-Paper-Technologie usw., aufweist.

4. System (1) nach einem der vorangehenden Ansprüche, wobei die Versorgung-Einrichtung (4):
- zumindest eine an der Regalschiene (3) ausgebildete Leiterschleife (L1 - L5), und
- eine mit der zumindest einen Leiterschleife (L1 - L5) gekoppelte, insbesondere mit deren beiden Schleifen-Anschlüssen (C1 - C5) elektrisch leitend verbundene, elektronische Versorgungseinheit (18) aufweist, die dazu ausgebildet ist, die Energie zur elektrischen Versorgung eines Regaletiketts (2), das an der Regalschiene (3) korrespondierend zu der Leiterschleife (L1 - L5) montiert ist, mit Hilfe der Leiterschleife (L1 - L5) kontaktlos an das Regaletikett (2) zu übertragen.

5. System (1) nach Anspruch 4, wobei
- entlang der Längserstreckung der Regalschiene (3) eine Mehrzahl von Leiterschleifen (L1 - L5) ausgebildet ist, die jede für sich mit der Versorgungseinheit (18) gekoppelt ist, und
- die Versorgungseinheit (18) zur selektiven Energieübertragung mit Hilfe jeder der Leiterschleifen (L1 - L5) ausgebildet ist.

6. System (1) nach Anspruch 5, wobei die Versorgungseinheit (18) zum Multiplexen der Energieübertragung über die jeweiligen Leiterschleife (L1 - L5) ausgebildet ist.

7. System (1) nach einem der Ansprüche 4 - 6, wobei die Versorgung-Einrichtung (18) eine zweite NFC-Schnittstelle als Versorgungseinheit (18) zur kontaktlosen Energieversorgung eines Regaletiketts (2) aufweist, wobei die mindestens eine Leiterschleife (L1 - L5) ein zur Energieübertragung bestimmter Bestandteil der zweiten NFC-Schnittstelle ist.

8. System nach einem der Ansprüche 4- 7, wobei die mindestens eine Leiterschleife (L1 - L5) in die Regalschiene (3) integriert oder an ihr befestigt ist, bevorzugt auf einer an der Regalschiene (3) positionierten Leiterplatte (17) ausgebildet ist, besonders bevorzugt in eine mit der Regalschiene (3) realisierte Leiterschleifen-Aufnahme (28) eingelegt ist.

9. System (1) nach einem der vorangehenden Ansprüche, wobei pro Regalschiene (3) genau eine einzige elektronische Versorgung-Einrichtung (4) zum Einsatz kommt.

10. System (1) nach Anspruch 9, wobei die elektronische Versorgung-Einrichtung (4) in die Regalschiene (3) integriert oder an ihr befestigt ist.

11. System (1) nach einem der vorangehenden Ansprüche, wobei eine separate Versorgungsstation (10; 21) zur Energieversorgung der elektronischen Versorgung-Einrichtungen (4) vorgesehen ist, bevorzugt einer Gruppe von elektronischen Versorgung-Einrichtungen (4), besonders bevorzugt für ein Regal (9), insbesondere für eine Gruppe von Regalen (9).

12. System (1) nach einem der vorangehenden Ansprüche, wobei
- die elektronische Versorgung-Einrichtung (4) auf funkbasierte Weise mit Energie versorgbar ausgebildet ist, und
- die Versorgungsstation (21) realisiert als Versorgungssender zur, insbesondere gerichteten, funkbasierten Energieversorgung der elektronischen Versorgung-Einrichtung (4) ausgebildet ist.

13. Verwendung einer elektronischen Versorgung-Einrichtung (4) zur kontaktlosen Energieversorgung und zur kontaktlosen Kommunikationsversorgung von zumindest einem Regaletikett (2), wobei das Regaletikett auf kontaktlose Weise mit Energie versorgbar und auch zur kontaktlosen Kommunikation ausgebildet ist, bei einer, insbesondere einer einzigen, Regalschiene (3), an der das zumindest eine Regaletikett (2) befestigt ist, wobei
die elektronische Versorgung-Einrichtung (4) zum Empfangen und Weiterleiten einer eindeutigen Kennung des an der Kommunikation beteiligten Regaletiketts (2) zwecks Bestimmung der Position des betreffenden Regaletiketts (2) ausgebildet ist.

## Claims

1. Electronic shelf labelling system (1) comprising:
- at least one electronic shelf label (2), realized in particular as an electronic shelf label display, the shelf label (2) being designed such that it can be contactlessly supplied with power, and
- at least one shelf edge strip (3), to which at least one such shelf label (2) is attached, and
- an electronic supply device (4) assigned to the shelf edge strip (3), in particular assigned only to this one shelf edge strip (3), which is designed to supply power contactlessly to the at least one electronic shelf label (2) attached there, wherein the electronic supply device (4) is also designed to communicate contactlessly with the shelf label (2) using the same technology that is also used for transmitting power to the shelf label (2),
**characterized in that**,
the electronic supply device (4) is designed to receive and forward a unique identifier of the shelf label (2) participating in the communication, for the purpose of determining the position of the relevant shelf label (2) .

2. System (1) according to Claim 1, wherein the shelf label (2) comprises a first NFC interface (11) for supplying power contactlessly to said shelf label.

3. System (1) according to Claim 1 or 2, wherein the shelf label (2) comprises an energy-saving display unit (13), in particular based on electronic ink or electronic paper technology, etc.

4. System (1) according to any one of the preceding claims, wherein the power supply device (4) comprises:
- at least one conductor loop (L1 - L5) formed on the shelf edge strip (3), and
- an electronic power supply unit (18) coupled to the at least one conductor loop (L1 - L5), in particular connected in an electrically conductive manner to the two loop terminals (C1 - C5) thereof, which is designed to contactlessly transmit the energy for supplying electrical power to a shelf label (2), which is mounted on the shelf edge strip (3) corresponding to the conductor loop (L1 - L5), to the shelf label (2) by means of the conductor loop (L1 - L5).

5. System (1) according to Claim 4, wherein
- a plurality of conductor loops (L1 - L5) is formed along the longitudinal extension of the shelf edge strip (3), each of which is individually coupled to the power supply unit (18), and
- the power supply unit (18) is designed for selective energy transmission by means of each of the conductor loops (L1 - L5).

6. System (1) according to Claim 5, wherein the power supply unit (18) is designed to multiplex the energy transmission via the respective conductor loop (L1 - L5) .

7. System (1) according to any one of Claims 4 to 6, wherein the power supply device (18) comprises a second NFC interface as a power supply unit (18) for contactlessly supplying power to a shelf label (2), wherein the at least one conductor loop (L1 - L5) is a component of the second NFC interface intended for energy transmission.

8. System according to any one of Claims 4 - 7, wherein the at least one conductor loop (L1 - L5) is integrated into the shelf edge strip (3) or is attached thereto, preferably formed on a printed circuit board (17) positioned on the shelf edge strip (3), particularly preferably inserted into a conductor loop holder (28) realized with the shelf edge strip (3).

9. System (1) according to any one of the preceding claims, wherein exactly one single electronic supply device (4) is used per shelf edge strip (3).

10. System (1) according to Claim 9, wherein the electronic supply device (4) is integrated into the shelf edge strip (3) or is attached to it.

11. System (1) according to any one of the preceding claims, wherein a separate supply station (10; 21) is provided for supplying power to the electronic supply devices (4), preferably a group of electronic supply devices (4), particularly preferably for a shelf (9), in particular for a group of shelves (9).

12. System (1) according to any one of the preceding claims, wherein
- the electronic supply device (4) is designed to be supplied with energy via radio means, and
- the supply station (21) is realized as a supply transmitter designed to supply power to the electronic supply device (4), in particular in a directed manner, via radio means.

13. Use of an electronic supply device (4) for contactlessly supplying power and for contactlessly supplying communication, to at least one shelf label (2), wherein the shelf label is designed such that it can be contactlessly supplied with power and also for contactless communication, in a, in particular a single, shelf edge strip (3) to which the at least one shelf label (2) is attached, wherein
the electronic supply device (4) is designed to receive and forward a unique identifier of the shelf label (2) participating in the communication for the purpose of determining the position of the relevant shelf label (2) .

## Revendications

1. Système d'étiquette de rayon électronique (1), qui présente :
- au moins une étiquette électronique de rayon (2), notamment réalisée sous la forme d'un affichage électronique d'étiquette de rayon, l'étiquette de rayon (2) est conçue pour être alimenté en énergie d'une manière sans contact, et
- au moins un rail de rayon (3) auquel au moins une telle étiquette de rayon (2) est fixée, et
- un dispositif d'alimentation électronique (4) affecté au rail de rayon (3), en particulier affecté uniquement au rail de rayon (3), qui est conçu pour l'alimentation électrique sans contact d'au moins une étiquette électronique de rayon (2) qui y est fixée, dans lequel le dispositif d'alimentation électronique (4) est conçu pour la communication sans contact avec l'étiquette de rayon (2) en utilisant la même technologie, qui est également utilisée pour la transmission d'énergie à l'étiquette de rayon (2),
**caractérisé en ce que**
le dispositif d'alimentation électronique (4) est conçu pour recevoir et transmettre un identifiant univoque de l'étiquette de rayon (2) impliquée dans la communication afin de déterminer la position de l'étiquette de rayon pertinente (2).

2. Système (1) selon la revendication 1, dans lequel l'étiquette de rayon (2) possède une première interface NFC (11) pour son alimentation en énergie sans contact.

3. Système (1) selon la revendication 1 ou 2, dans lequel l'étiquette de rayon (2) présente un dispositif d'affichage économe en énergie (13), notamment à base d'encre électronique ou technologie de papier électronique, etc.

4. Système (1) selon une quelconque des revendications précédentes, dans lequel le dispositif d'alimentation (4) présente :
- au moins une boucle conductrice (L1 - L5) conçue sur le rail de rayon (3), et
- une unité d'alimentation électronique (18) couplée à la au moins une boucle conductrice (L1 - L5), notamment connectée électriquement à ses deux bornes de boucle (C1 - C5), qui est conçue pour transmettre l'énergie pour l'alimentation électrique d'une étiquette de rayon (2), qui est montée sur le rail de rayon (3) correspondant à la boucle conductrice (L1-L5), à l'aide de la boucle conductrice (L1-L5) sans contact à l'étiquette de rayon (2).

5. Système (1) selon la revendication 4, dans lequel
- Le long de l'extension longitudinale du rail de rayon (3), une pluralité de boucles conductrices (L1-L5) est conçue, qui sont chacune couplées à l'unité d'alimentation (18), et
- L'unité d'alimentation (18) est conçue pour la transmission sélective d'énergie en utilisant chacune des boucles conductrices (L1-L5).

6. Système (1) selon la revendication 5, dans lequel l'unité d'alimentation (18) est conçue pour multiplexer la transmission d'énergie via la boucle conductrice respective (L1-L5).

7. Système (1) selon une quelconque des revendications 4 à 6, dans lequel le dispositif d'alimentation (18) comporte une deuxième interface NFC en tant qu'unité d'alimentation (18) pour l'alimentation en énergie sans contact d'une étiquette de rayon (2), dans lequel la au moins une boucle conductrice (L1-L5) fait partie de la deuxième interface NFC destinée à la transmission d'énergie.

8. Système selon une quelconque des revendications 4 à 7, dans lequel au moins une boucle conductrice (L1-L5) est intégrée dans le rail de rayon (3) ou fixée à celui-ci, est de préférence conçue sur une carte de circuit imprimé (17) positionnée sur le rail de rayon (3), de manière particulièrement préférée est insérée dans le réceptacle de bouche conductrice (28) réalisé avec le rail de rayon (3).

9. Système (1) selon une quelconque des revendications précédentes, dans lequel par rail de rayon (3) exactement un seul dispositif d'alimentation électronique (4) est utilisé.

10. Système (1) selon la revendication 9, dans lequel le dispositif d'alimentation électronique (4) est intégré ou fixé au rail de rayon (3).

11. Système (1) selon une quelconque des revendications précédentes, dans lequel une station d'alimentation séparée (10 ; 21) pour fournir de l'énergie aux dispositifs d'alimentation électroniques (4) est prévue, de préférence un groupe de dispositifs d'alimentation électroniques (4), de manière particulièrement préférée pour un rayon (9), notamment pour un groupe de rayons (9).

12. Système (1) selon une quelconque des revendications précédentes, dans lequel
- le dispositif électronique d'alimentation (4) est conçu pour être alimenté en énergie par radio, et
- la station d'alimentation (21) est réalisée en tant qu'émetteur d'alimentation pour l'alimentation en énergie radio, notamment directionnelle, du dispositif d'alimentation électronique (4).

13. Utilisation d'un dispositif d'alimentation électronique (4) pour l'alimentation en énergie sans contact et pour la fourniture de communication sans contact d'au moins une étiquette de rayon (2), dans laquelle l'étiquette de rayon peut être alimentée en énergie sans contact et est également conçue pour une communication sans contact, dans le cas d'un, en particulier d'un seul, rail de rayon (3) auquel est fixée au moins une étiquette de rayon (2),
le dispositif d'alimentation électronique (4) est conçu pour recevoir et transférer un identifiant univoque de l'étiquette de rayon (2) impliquée dans la communication dans le but de déterminer la position de l'étiquette de rayon pertinente (2).
